# EUROPEAN PATENT APPLICATION

(11) **EP 2 930 602 A2**
(43) Date of publication of application: **14.10.2015**
(21) Application number: 13786899.8
(22) Date of filing: 11.07.2013
(51) Int. Cl.: G06F 3/0488, G06F 3/0484, G06F 3/041

(54) **METHOD AND SYSTEM FOR IMPLEMENTING SUSPENDED GLOBAL BUTTON ON TOUCH SCREEN TERMINAL INTERFACE**

(30) Priority: 04.12.2012 CN 201210512981
(71) Applicant: ZTE Corporation, Shenzhen, Guangdong 518057 (CN)
(72) Inventor: ZHOU, Huihong, Shenzhen Guangdong 518057 (CN)
(74) Representative: Brevalex
(86) International application number: PCT/CN2013/079231
(87) International publication number: WO 2013/167028

(57) **Abstract**

A method for implementing a suspending global button on an interface of a touch screen terminal is provided, in which a touch screen terminal determines a user's gesture operation on a global button; if the gesture operation is determined to be a first gesture operation, an instruction for moving a global button is executed with the first gesture operation and a result of the execution of the instruction is displayed. a system for implementing a suspending global button on an interface of a touch screen terminal is also provided.

## Description

### TECHNICAL FIELD

The disclosure relates to the field of mobile terminal, and specifically to a method and system for implementing a suspending global button on an interface of a touch screen terminal.

### BACKGROUND

With the development of electronic techniques, there are higher requirements on the operating experience, appearance and screen size of handheld touch screen terminals. Most handheld touch screen terminals have some system-level operating controls on their operating interfaces to implement a jump within a programme or between programmes, such as Back button, Home button, Menu button, etc.

Up to now, a system-level operating space on the handheld touch screen terminal may be implemented by pressing a physical button or by software. When a physical button is to be used, a physical button has to be arranged on the terminal, which disadvantageously results in that a physical hardware component has to be added in the terminal, of which the size is limited, , therefore reducing the screen size and increasing the cost of hardware. When software is to be used, a fixed soft keyboard area has to be arranged in the screen, thus occupying a portion of the screen and reducing the effective display area of the screen.

### SUMMARY

According to embodiments of the disclosure, a method and system for implementing a suspending global button on an interface of a touch screen terminal is provided, which may increase the effective display area of the touch screen and improve user experience.

An embodiment of the disclosure provides a method for implementing a suspending global button on an interface of a touch screen terminal, which includes:
a user's gesture operation on a global button is determined by a touch screen terminal; and
when the gesture operation is determined to be a first gesture operation, an instruction for moving the global button is executed with the first gesture operation, and a result of the execution of the instruction is displayed.

Preferably, the execution of the instruction for moving the global button includes:
a position coordinate is determined according to a centre point of the global button, and the position coordinate is stored; and
the global button is displayed at the position coordinate.

Preferably, the method further includes:
when the gesture operation is determined to be a second gesture operation, executing an instruction for a function with the second gesture operation; or
when the gesture operation is determined to be a third gesture operation, an instruction for displaying more function options is executed with the third gesture operation.

Preferably, the gesture operation includes: one-click gesture operation, long-press gesture operation and sliding gesture operation.

An embodiment of the disclosure further provides a system for implementing a suspending global button on an interface of a touch screen terminal, the system includes a gesture determination unit, an execution unit and a display unit, in which
the gesture determination unit is configured to determine a user's gesture operation on a global button, and when the gesture operation is determined to be a first gesture operation, send a determination result to the execution unit;
the execution unit is configured to, when the determination result from the gesture determination unit is the first gesture operation, execute an instruction for moving the global button; and
the display unit is configured to display a result of execution of the instruction for moving the global button.

Preferably, the gesture determination unit is further configured to, when the gesture operation is determined to be a second gesture operation, send a determination result to the execution unit;
wherein the execution unit is further configured to, when the determination result from the gesture determination unit a second gesture operation, execute an instruction for a function;
accordingly, the display unit is further configured to display a result of the execution of the instruction for the function.

Preferably, the gesture determination unit is further configured to, when the gesture operation is determined to be a third gesture operation, send a determination result to the execution unit;
accordingly, the execution unit is further configured to, when the determination result from the gesture determination unit is the third gesture operation, execute an instruction for displaying more function options; and
accordingly, the display unit is further configured to display a result of the execution of the instruction for displaying more function options.

Preferably, the system further includes a coordinate acquisition unit and a storage unit, in which
the coordinate acquisition unit is configured to acquire a position coordinate of a centre point of the global button; and
the storage unit is configured to store the position coordinate.

According to the method and system for implementing a suspending global button on an interface of a touch screen terminal provided in the embodiments of the disclosure, a touch screen terminal determines an operation instruction selected by a user according to a user's gesture operation; if the gesture operation is determined to be a first gesture operation, an instruction for moving a global button is executed with the first gesture operation and a result of the execution of the instruction is displayed. In the embodiments of the disclosure, a user's gesture operation are used to determine an operating instruction corresponding to an operation selected by the user, which enables a global button to support multiple functions and to take the place of the physical button in the prior art. In addition, an instruction for moving the global button may be executed with the user's gesture operation, which makes it possible that the global button is suspended in an interface of the touch screen terminal and its position is changed arbitrarily according to the instruction from the user. The global button takes the place of the fixed soft keyboard area and does not occupy a fixed area of the screen, therefore increasing the effective display area of the screen and improving user experience.

### BRIEF DESCRIPTION OF THE DRAWINGS

Figure 1 is a schematic diagram of the flow chart of a method for implementing a suspending global button on an interface of a touch screen terminal according to a first embodiment of the disclosure;
Figure 2 is a schematic diagram of the architecture of a system for implementing a suspending global button on an interface of a touch screen terminal according to the first embodiment of the disclosure;
Figure 3 is a schematic diagram of the flow chart of a method for implementing a suspending global button on an interface of a touch screen terminal according to a second embodiment of the disclosure;
Figure 4 is a schematic diagram of the displayed content after an instruction for displaying more function options is executed according to a third embodiment of the disclosure;
Figure 5 is a schematic diagram of the displayed content after an instruction for moving a global button is executed according to a fourth embodiment of the disclosure.

### DETAILED DESCRIPTION

The embodiments of the disclosure are further described in detail in combination with accompanying drawings and specific embodiments.

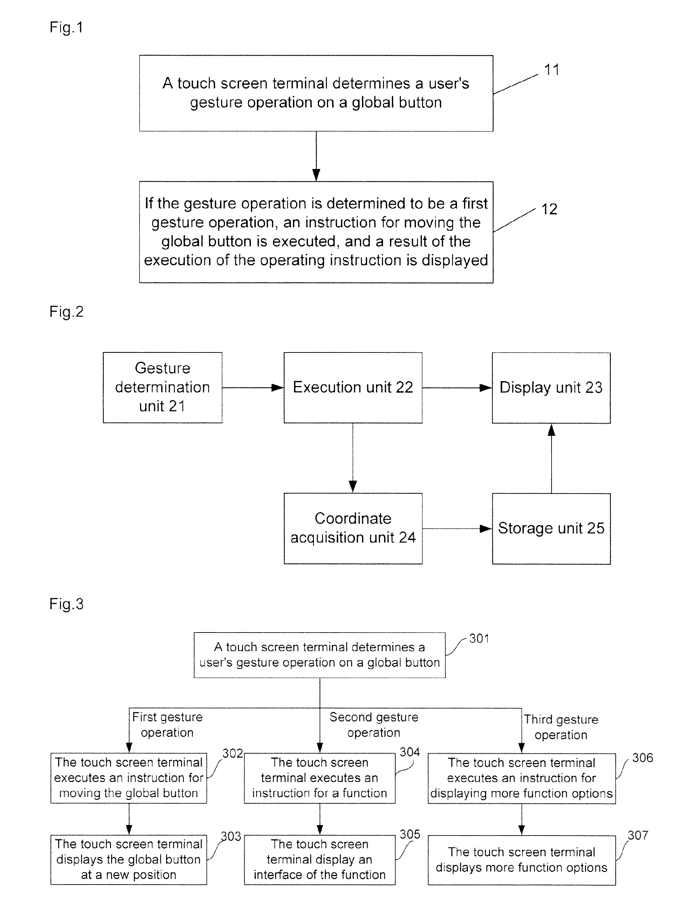

Figure 1 is a schematic diagram of the flow chart of a method for implementing a suspending global button on an interface of a touch screen terminal provided in a first embodiment of the disclosure. As shown in figure 1, the method includes following steps:
Step 11: a touch screen terminal determines a user's gesture operation on a global button;
   here, the touch screen terminal may determine the user's gesture operation on the global button based on the duration in which the user touches the screen and whether a sliding action exists. For example, if the duration in which the user touches the screen is short and there is no sliding action, this gesture operation may be defined as a first gesture operation and named "one-click gesture operation"; if the duration in which the user touches the screen is long and there is no sliding action, this gesture operation may be defined as a second gesture operation and named "long-press gesture operation"; if the duration in which the user touches the screen is long and there is a sliding action, this gesture operation may be defined as a third gesture operation and named "sliding gesture operation", etc.
Step 12: if the gesture operation is determined to be a first gesture operation, an instruction for moving the global button is executed with the first gesture operation, and a result of the execution of the instruction is displayed;
   here, a determination result of the gesture operation includes: the first gesture operation, the second gesture operation and the third gesture operation. Specifically, the gesture operation may be a one-click gesture operation, or a long-press gesture operation or a sliding gesture operation, an instruction corresponding to an operation selected by the user being executed;
   specifically, the operating instruction includes executing an instruction for a function, or executing an instruction for displaying more function options or executing an instruction for moving the global button; the touch screen terminal finally displays an result of the execution of the operation instruction, which includes displaying an interface for a function, or displaying more function options or displaying the global button at any position.

For example, the determination result is the first gesture operation, which may be the sliding gesture operation, with which an instruction for moving the global button may be executed; accordingly, after executing the instruction for moving the global button, the touch screen terminal displays the global button at a new position.

For example, the determination result of the gesture operation is the second gesture operation. By means of the second gesture operation on the global button, the touch screen terminal executes an instruction for a function, which may be a Back instruction, or a Home instruction, or an instruction for launching a programme which has been used recently. Accordingly, after executing the instruction for a function, the touch screen terminal displays a corresponding functional interface. For example, the touch screen terminal displays the last interface after executing the Back instruction; the touch screen terminal displays a desktop after executing the Home instruction; and the touch screen terminal displays an interface of a programme which has been used recently after executing the instruction for launching a programme which has been used recently.

For example, the determination result of the gesture operation is the third gesture operation, with which an instruction for displaying more function options is executed, which may be an instruction for displaying menu options, etc. Accordingly, the touch screen terminal displays menu options after executing the instruction for displaying more function options.

Specifically, the execution of the instruction for moving the global button may be implemented in following manner: a coordinate is determined according to a new position of a centre point of the global button, or a new coordinate is determined according to a moving trace of a centre point of the global button, and the new coordinate is stored.

In practical applications, the global button may be displayed in various forms. For example, its shape may be square, triangular, circular; its size may be customised according to the screen size; its style includes the colour and the pattern of the button, which may be set according to the background pattern displayed on the touch screen; the global button may be set opaque, translucent or transparent, or may be displayed in opaque state when being used and in translucent or transparent state when it has not been used for a while.

In order to implement above-mentioned method, the first embodiment of the disclosure further provides a system for implementing a suspending global button on an interface of a touch screen terminal. As shown in figure 2, the system includes a gesture determination unit 21, an execution unit 22 and a display unit 23, in which
the gesture determination unit 21 is configured to determine a user's gesture operation on a global button, and when the gesture operation is determined to be a first gesture operation, send a determination result to the execution unit 22;
the execution unit 22 is configured to, when the determination result from the gesture determination unit 21 is the first gesture operation, execute an instruction for moving the global button; and
the display unit 23 is configured to display a result of execution of the instruction for moving the global button.

The gesture determination unit 21 is further configured to, when the gesture operation is determined to be a second gesture operation, send a determination result to the execution unit 22;
accordingly, the execution unit 22 is further configured to, when the determination result from the gesture determination unit 21 a second gesture operation, execute an instruction for a function;
accordingly, the display unit 23 is further configured to display a result of the execution of the instruction for the function.

The gesture determination unit 21 is further configured to, when the gesture operation is determined to be a third gesture operation, send a determination result to the execution unit 22;
accordingly, the execution unit 22 is further configured to, when the determination result from the gesture determination unit 21 is the third gesture operation, execute an instruction for displaying more function options; and
accordingly, the display unit 23 is further configured to display a result of the execution of the instruction for displaying more function options.

The system further includes a coordinate acquisition unit 24 and a storage unit 25, in which
the coordinate acquisition unit 24 is configured to acquire a position coordinate of a centre point of the global button; and
the storage unit 25 is configured to store the acquired position coordinate.

Embodiments hereafter take a button of which shape is circular and colour is black & white & grey as an example. In combination with figures 3 to 5, specific implementations of a suspending global button on a touch screen interface of the embodiments of the disclosure are further described.

Figure 3 is a schematic diagram of the flow chart of a method for implementing a suspending global button on an interface of a touch screen terminal according to a second embodiment of the disclosure. As shown in figure 3, the method includes following steps:
Step 301: a touch screen terminal determines a user's gesture operation on a global button;
   here, the touch screen terminal may determine the user's gesture operation on the global button based on the duration in which the user touches the screen and whether a sliding action exists. For example, if the duration where the user touches the screen is short and there is no sliding action, this gesture operation may be defined as a first gesture operation and named "one-click gesture operation"; if the duration in which the user touches the screen is long and there is no sliding action, this gesture operation may be defined as a second gesture operation and named "long-press gesture operation"; if the duration in which the user touches the screen is long and there is a sliding action, this gesture operation may be defined as a third gesture operation and named "sliding gesture operation", etc.

In this embodiment, if the touch screen terminal determines that a user's gesture operation on the global button is the first gesture operation, steps 302 to 303 are performed;
if the touch screen terminal determines that a user's gesture operation on the global button is the second gesture operation, steps 304 to 305 are performed;
if the touch screen terminal determines that a user's gesture operation on the global button is the third gesture operation, steps 306 to 307 are performed.

Steps 302 to 303: the touch screen terminal executes an instruction for moving the global button and displays the global button at a new position;
here, if the first gesture operation is performed on the global button, such as the sliding gesture operation, the touch screen terminal executes the instruction for moving the global button, may determine a coordinate according to a new position of a centre point of the global button and stores the coordinate of the coordinate of the new position; accordingly, the touch screen terminal displays the global button at the new position after executing the instruction for moving the global button.

Step 304 to 305: the touch screen terminal executes an instruction for a function and displays an interface of the function, then terminates current processing flow;
here, by means of the second gesture operation on the global button, the touch screen terminal executes an instruction for a function, which may be a back instruction, or a home instruction, or an instruction for launching a programme which has been used recently; this function may be pre-stored in the touch screen terminal with a software design, or may be set by the user; accordingly, after executing the instruction for a function, the touch screen terminal displays a corresponding functional interface; for example, the touch screen terminal displays last interface after executing the instruction for returning to last interface; the touch screen terminal displays a desktop after executing the instruction for returning to desktop; and the touch screen terminal displays an interface of a programme which has been used recently after executing the instruction for launching a programme which has been used recently.

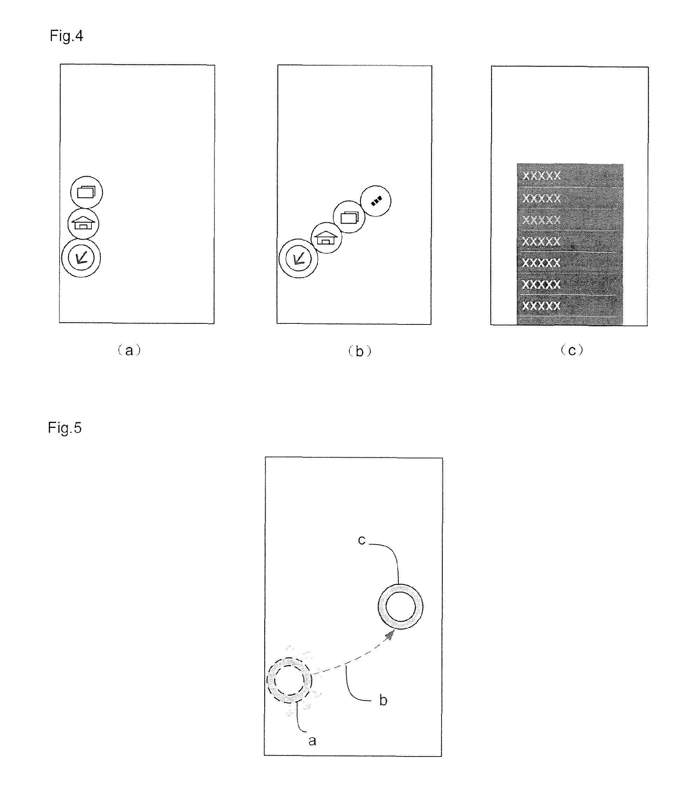

Step 306 to 307: the touch screen terminal executes an instruction for displaying more function options and displays more function options, then terminates current processing flow;
here, by means of the third gesture operation on the global button, the touch screen terminal executes the instruction for displaying more function options, which may be an instruction for displaying menu options, specifically, the more function options which have been displayed may include single function options or multi-level function options, as shown in figure 4; figure 4 is a schematic diagram of the displayed content after an instruction for displaying more function options is executed according to a third embodiment of the disclosure.

Figure 4(a) is a schematic diagram of the displayed content of more single function options after an instruction for displaying more function options is executed; as shown in figure 4(a), by means of the third gesture operation on the global button, the touch screen terminal displays more function options, in which the function options are single function options, such as a home function, or a back function, or executing a function; a certain function option is selected from the plurality of function options with the third gesture operation, such that this function may be performed.

Figure 4(b) is a schematic diagram of the displayed content of multi-level function options after an instruction for displaying more function options is executed; as shown in figure 4(b), by means of the third gesture operation on the global button, the touch screen terminal displays more function options, which are multi-level function options, for example, functions such as message, contacts and settings, or applications such as game, chat tools and multimedia; a certain function option is selected from more function options with the third gesture operation, and next-level function options are displayed in the form of menu or in other manners.

Figure 5 is a schematic diagram of the displayed content after an instruction for moving a global button is executed in a fourth embodiment of the disclosure. As shown in figure 5, the global button is initially at position a with a coordinate (X₁, Y₁); after the first gesture operation on the global button (i.e., operating the global button following a trace b with a sliding gesture), the global button is moved to position c; the touch screen terminal determines the coordinate according to the new position of a centre point of the global button, for example, the coordinate of the position *c* is (X₂, Y₂); the coordinate is stored; and the global button is displayed at the position c.

The descriptions above are just preferred embodiments of the disclosure, without limiting the scope of the disclosure. Any amendment, equivalence and improvement within the spirit and scope of the present disclosure do not apart from the scope of the present disclosure.

### Industrial applicability

In the embodiments of the disclosure, a user's gesture operation are used to determine an operating instruction corresponding to an operation selected by the user, which enables a global button to support multiple functions and to take the place of the physical button in the prior art. In addition, an instruction for moving the global button may be executed with the user's gesture operation, which makes it possible that the global button is suspended in an interface of the touch screen terminal and its position is changed arbitrarily according to the instruction from the user. The global button takes the place of the fixed soft keyboard area and does not occupy a fixed area of the screen, therefore increasing the effective display area of the screen and improving user experience.

## Claims

1. A method for implementing a suspending global button on an interface of a touch screen terminal, comprising:
determining, by a touch screen terminal, a user's gesture operation on a global button; and
when the gesture operation is determined to be a first gesture operation, executing an instruction for moving the global button with the first gesture operation, and displaying a result of the execution of the instruction.

2. The method according to claim 1, wherein the executing an instruction for moving the global button comprises:
determining a position coordinate according to a center point of the global button, and storing the position coordinate; and
displaying the global button at the position coordinate.

3. The method according to claim 1, wherein the method further comprises:
when the gesture operation is determined to be a second gesture operation, executing an instruction for a function with the second gesture operation; or
when the gesture operation is determined to be a third gesture operation, executing an instruction for displaying more function options with the third gesture operation.

4. The method according to any of claims 1 to 3, wherein the gesture operation comprises: one-click gesture operation, long-press gesture operation and sliding gesture operation.

5. A system for implementing a suspending global button on an interface of a touch screen terminal, comprising a gesture determination unit, an execution unit and a display unit,
wherein the gesture determination unit is configured to determine a user's gesture operation on a global button, and when the gesture operation is determined to be a first gesture operation, send a determination result to the execution unit;
wherein the execution unit is configured to, when the determination result from the gesture determination unit is the first gesture operation, execute an instruction for moving the global button; and
wherein the display unit is configured to display a result of execution of the instruction for moving the global button.

6. The system according to claim 5,
wherein the gesture determination unit is further configured to, when the gesture operation is determined to be a second gesture operation, send a determination result to the execution unit;
wherein the execution unit is further configured to, when the gesture operation is determined to be a second gesture operation, execute an instruction for a function; and
wherein the display unit is further configured to display a result of the execution of the instruction for the function.

7. The system according to claim 6,
wherein the gesture determination unit is further configured to, when the gesture operation is determined to be a third gesture operation, send a determination result to the execution unit; and
wherein the execution unit is further configured to, when the determination result from the gesture determination unit is the third gesture operation, execute an instruction for displaying more function options; and
wherein the display unit is further configured to display a result of the execution of the instruction for displaying more function options.

8. The system according to claim 5, wherein the system further comprises a coordinate acquisition unit and a storage unit,
wherein the coordinate acquisition unit is configured to acquire a position coordinate of a center point of the global button; and
wherein the storage unit is configured to store the position coordinate.
